# EUROPEAN PATENT SPECIFICATION

(11) **EP 2 351 931 B1**
(45) Date of publication and mention of the grant of the patent: **07.05.2014**
(21) Application number: 11150761.2
(22) Date of filing: 12.01.2011
(51) Int. Cl.: F03D 7/02

(54) **Device for controlling the yaw of a fluid-operated generator of electric energy**
Vorrichtung zur Steuerung des Gierwinkels eines fluidbetriebenen Generators von elektrischen Energie
Dispositif pour contrôler le lacet d'un générateur d'énergie électrique à fluide

(30) Priority: 12.01.2010 IT BA20100003 U
(43) Date of publication of application: 03.08.2011
(73) Proprietor: Sivilli, Domenico, 70027 Bari (IT)
(72) Inventor: Sivilli, Domenico, 70027 Bari (IT)
(74) Representative: Reniero, Cirillo Silvano

(56) References cited:
- FR-A- 966 419
- GB-A- 2 107 794
- US-A- 2 417 022
- US-A1- 2009 208 334

## Description

The present invention relates to a device for controlling the yaw of a wind generator of electric energy.

As it is known, control devices for a wind generator or windmill have already been proposed which are designed to adjust the electric power of the generator in such a way as to ensure an operation of the generator always in safety conditions. The control devices monitor the rotation speed of the generator rotor, which is disconnected or cut-off, when a predetermined threshold or cut-off speed is reached. Three different types of control devices are generally used, i. e. yaw control devices, pitch control devices, and braking control devices.

A yaw control device is designed to ensure the correct alignment of the axis of rotation of the rotor with the wind direction. The control of the yaw of medium or large size wind generators is carried out by a servomechanism energizable by an automatic sensor arranged to detect any offsetting of the rotor axis with respect to the wind direction and thus to control a reversible electric motor that causes the rotor-carrying nacelle or gondola to be aligned with a correct trim. The yaw control of relatively small size windmills is usually of a passive-type, and thus it is sufficient to use a simple directional rudder to that purpose.

When wind turbines having a leeward rotor are used, the alignment with the wind direction is ensured by the aerodynamic cone formed by the rotor itself owing to the inclination of the turbine blades or vanes.

The control of the yaw may also be exploited in an active way in order to misalign the axis of the rotor with respect to the wind direction, thereby reducing its speed of rotation. However, in general such an adjusting system of the rotation speed is not much adopted for small size wind generators having a fixed pitch. The mostly used system for adjusting the power of wind generators with a fixed pitch is the "stall control", i. e. control of a passive type aiming at gradually misaligning the rotor, when the wind speed is very high and close to the cut-off value, until the stall thereof is reached.

Pitch control devices for controlling the power of variable speed wind generators are active systems designed to control the pitch, i. e. the angle of incidence of the rotor vanes with respect to the wind direction, thereby changing the aerodynamic efficiency and thus the rotation speed of the rotor.

Braking control devices usually comprise a disc brake which is actuated when an emergency occurs, or is used as a parking brake, when full block of the rotor is desired, independently from the wind speed, e. g. for conducting maintenance operations.

The US patent application no. 2009/0208334 teaches a vertical rudder including: a system of bars and listels for supporting three laminar flat elements arranged one following the other, one of which, the median one, is angularly displaceable by a traction force applied on one face thereof by a wire, whose other end is fixed to a counterweight slidingly mounted in a hollow rod or tube. A plate or flat wind is fixed to the other face of the median flat element by means of a transverse element or arm lying in a plane tilted at a predetermined angle with respect to the median plane.

Should a wind stream flow in a direction parallel to the rudder, it acts on the wing, and thus exerts a transversal pressure to the lying plane of the plate, thereby determining a momentum which causes an angular displacement of the median element against the action exerted by the suitably calibrated counterweight, to cause a misalignment of the whole system with respect to the wind direction.

The main object of the present invention is to provide a device for automatically controlling the yaw of a wind generator of electric energy when the wind direction exceeds a predetermined threshold value.

Another object of the present invention is to provide an adjustable device for automatically controlling the yaw.

Another object of the present invention is to provide a control device having a simple and therefore reliable structure.

Not least object of the present invention is that the control device can be produced at substantially low costs and used in a large range of medium-small size wind generators.

These and still other objects that will better appear below are achieved by a device as claimed in claim 1.

Further aspects and advantages of the present invention will better appear from the following detailed description of preferred embodiments of a yaw control device illustrated by way of non-limiting example in the accompanying drawings, in which:
- Figure 1 is a front view of a rudder for a wind generator provided with a yaw control device according to the present invention;
- Figure 2 is a rear view of the rudder of Fig. 1;

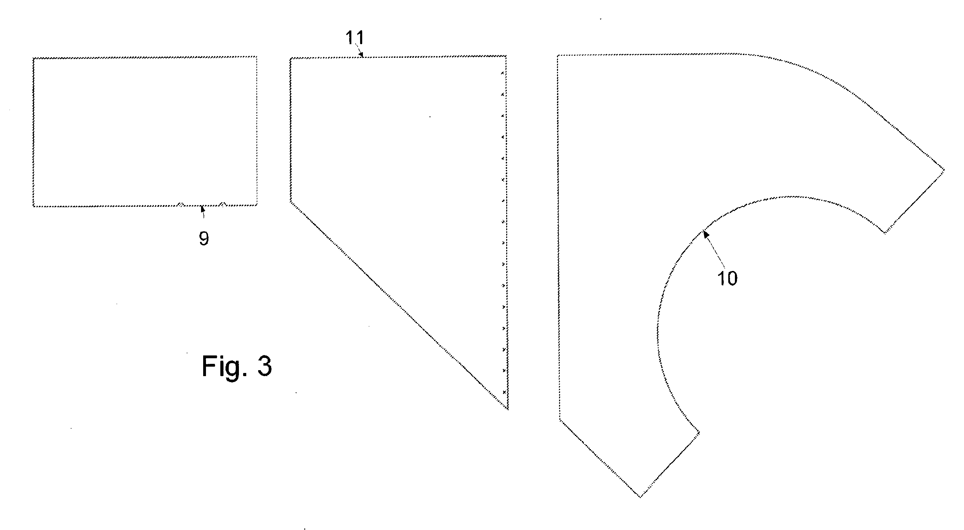

- Figure 3 is a side view of two fixed lateral panels and of an intermediate angularly displaceable aileron or flap of the rudder of Figures 1 and 2;
- Figures 4 and 5 are elevated front and lateral views, respectively, of a retaining member applied to one face of the intermediate aileron;
- Figure 6 is an elevated front view of a control wing overhangingly fixable to the other face of the intermediate aileron;
- Figure 7 is a cross-section view taken along the line VII-VII of Fig. 6;
- Figure 8 is a lateral view of the control wing of Fig. 6;
- Figure 9 is a plan view with parts cut away of a counterweight slidably inserted into a tube having a rectangular light;
- Figure 10 is a view from below of Fig. 9;
- Figure 11 is a rear view of Fig. 9;
- Figures 12 and 13 are front and lateral views, respectively, of the weight and counterweight of Fig. 9; and
- Figure 14 is an longitudinal axial cross view of a bush.

With reference to the above-listed Figures, it will be noted that a control device, generally indicated with 1 and arranged to control the yaw of a fluid-dynamic generator of electric energy (not shown in the drawings), has a directional rudder structure 2 also acting as a support frame for the whole device. Device 1 is designed to be overhangingly borne by the generator to be controlled, and is anchored thereto, e. g. by a pair of ears 3 which can be bolted to it. The rudder 2 is located, in use, lee with respect to the rotor of the wind generator. The rudder structure 2 extends in a substantially vertical, in use, lying plane.

More particularly, the rudder 2 has two longitudinal members, e. g. tubular members 4 and 5 rigidly connected by transverse members 6, 7, and 8 spaced from one another. The longitudinal member 4 is substantially straight and has a distal end 4a, in use, downwardly curved, whereas the longitudinal member 5 comprises two substantially straight lengths tilted one with respect to the other, the distal length 5a being, in use, downwardly directed. Advantageously, the tilted lengths of the longitudinal member 5 are connected to one another by a stiffening rod 5b, e. g. bolted thereto. The longitudinal members 4 and 5 and the transverse members 6, 7, and 8 lie in a sole lying plane, thereby forming a bidimensional frame designed to support:
- a proximal panel 9 fixed in any suitable way to the proximal straight lengths of the longitudinal members 4 and 5, and to the transverse members 6 and 7,
- a distal panel 10 fixed in any suitable way to the distal lengths 4a and 5a of the longitudinal members and to the transverse member 8, and preferably having a semicircular terminal notch 10a, and
- an aileron or intermediate panel 11 shaped as a movable aileron or flap hinged in any suitable way to the transverse member 8, which, in use, is designed to be kept in a substantially vertical trim, thereby the intermediate panel 11 being horizontally angularly displaceable on the same side or directional side with respect thereto.

The aileron 11 is hinged to the rudder structure 2, in such a way as to be angularly displaceable with respect to its lying plane about a substantially vertical, in use, axis. In the embodiment shown in the drawings, the aileron 11 is hingeable to the free edge of the panel 10 close and parallel to the transverse member 8 by means of a sequence of rings spaced from one another (not shown in the drawings).

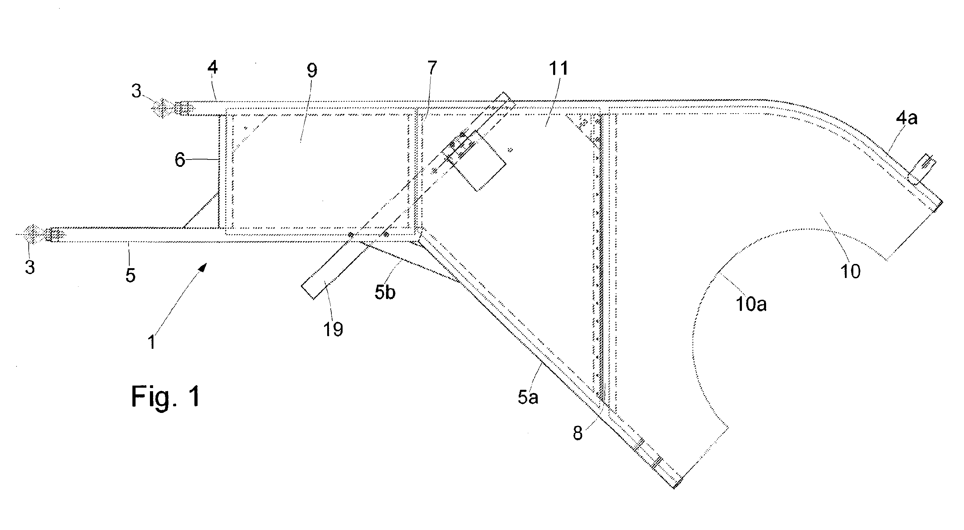

Preferably, the panels 9 and 10 and the directional aileron 11 are applied to the same side of the frame 2 and have an encumbrance slightly greater than the respective light delimited between the longitudinal and transverse members (Fig. 1).

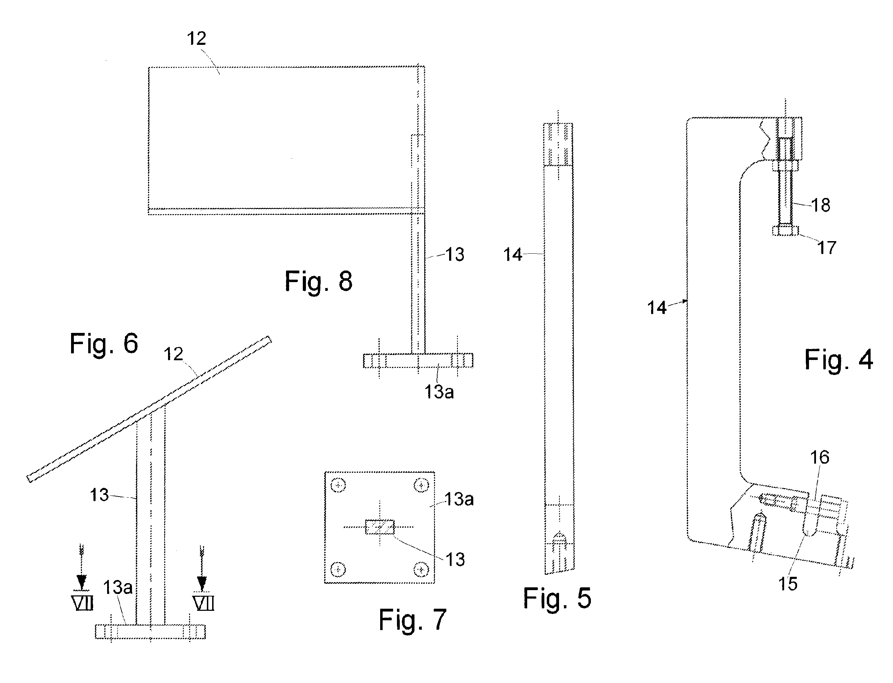

Control means are supported at one face of the angularly movable intermediate panel 11, typically comprising a wing shaped as a flat vane 12 tilted with respect to the aileron 11 and overhangingly supported by it, e. g. a stiff arm 13 integral with an enlarged base 13a securable by bolts to the aileron 11 (Figures 6 to 8). The wing 12 is arranged to control the angular displacements of the aileron 11 in order to keep it out of alignment with respect to the rudder, as it will be further explained hereinafter.

On the opposite side, the aileron 11 supports retaining means, preferably adjustable retaining means, advantageously comprising a relatively thick stirrup 14 which is substantially C-shaped (Figures 4 and 5), and at one end thereof is anchored, typically bolted to the aileron 11, and has a notch 15. A pin 16, e. g. a bolt with one threaded end, is locatable astride the notch 15, whereas at the other end of the bolt, the rod bears a retainer 17 comprising an abutting head of an adjusting screw, which is adjustably screwable into the rod 14. The retaining means are arranged to abut against the rudder structure 2 in order to limit the maximum width of the angular displacements of the aileron, as it will be further explained hereinafter.

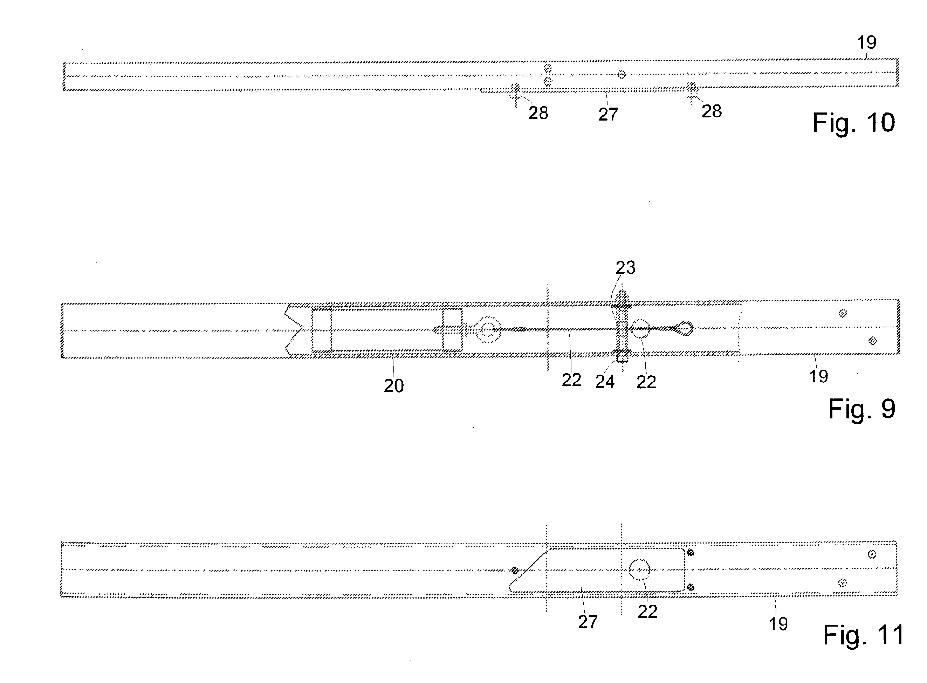

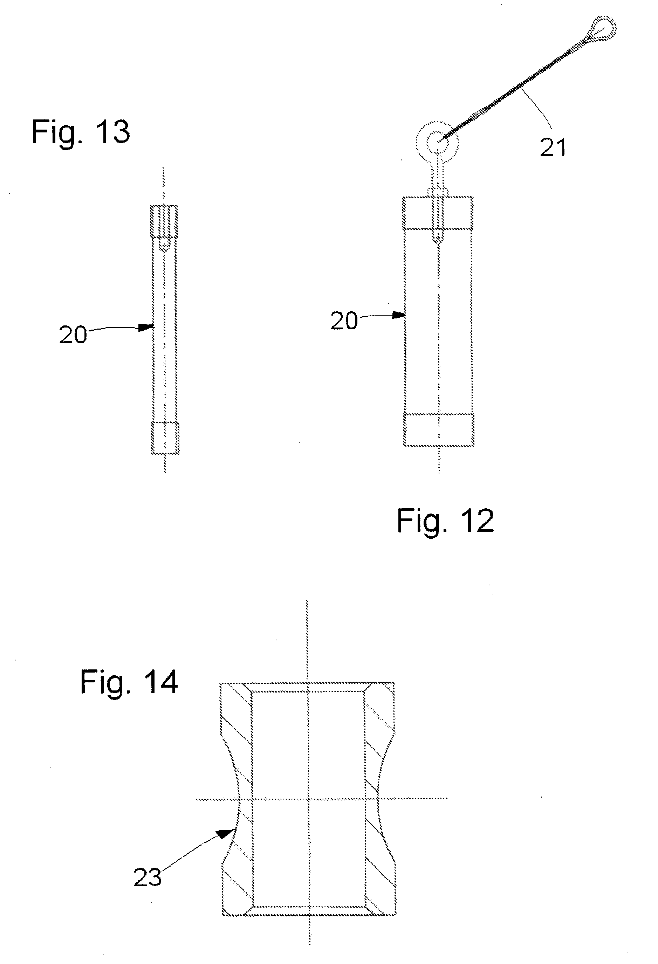

The device 1 also has adjustment means supported by the rudder 2 and designed to yieldingly and controllably contrast the angular displacements of the aileron 11, the adjustment means including for example:
- a section of a tubular member or tube 19 located astride of the longitudinal members 4 and 5 at the panel 9 and at the aileron 11, but extending not-parallel to the transverse members 6 and 7, i. e. tilted with respect thereto, and
- a weight 20 (Figures 9 to 13) slidingly mounted inside the tube 19 and, in use, anchored to the pin 16 in the stirrup 14 by means of a rope 21 designed to extend out of the tube 19 through a hole 22. A sagged transverse bush 23 (Figures 9 and 14) is preferably mounted in the tube 19 close to the hole 22, the bush being preferably made of an antifriction material and supported, e. g., by a bolt pin 24 extending throughout the light of the tube 19 and designed to allow the rope 21 to slide while changing direction towards the hole 22.

According to a variation, the rope 21 has one end thereof anchored to the weight 20, whereas its other end is anchored to the aileron 11, opposite to the control means 12.

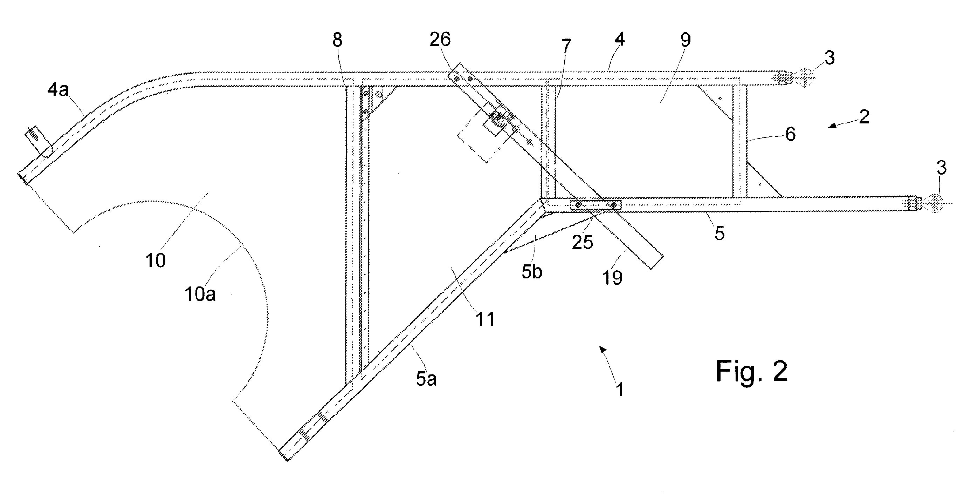

From a constructional point of view, the tube 19 can be fixed to the longitudinal member 5 by means of a stirrup 25 (Figure 2) and to the longitudinal member 4 by means of screws 26. Externally to the tube 19 and at the hole 22, a reinforcement plate 27 is preferably provided for, which is, e. g., securable to the tube 19 by means of screws 28 (Figure 10) and faces, in use, towards the aileron 11.

With the arrangement described above, when the wind speed reaches predetermined values, owing to the action of the aerodynamic forces applied to the wing 12 by the wind, which action is yieldingly opposed by the weight 20 in the tube 19, the aileron or flap 11 is automatically angularly moved to an opened position, i. e. it is moved away from the transverse member 7. In this way, a passive type control is obtained, which gradually causes the rotor to reach a stall condition, if the wind speed is increasing up to the cut-off value.

When the wind speed starts decreasing, also the aerodynamic forces applied to the wing 12 decrease, and therefore the weight 20 gradually prevails and takes the aileron 11 back to its closure position close to the rudder 2.

The maximum angular displacement of the aileron 11 is determined by the adjustable position of the head 17 of the screw 18 which, if the wind is too strong, abuts against a portion of the rudder, typically against the tube 19.

As it will be understood, with a yaw control device according to the present invention, unlike with the solutions proposed up to now, such as the solution taught by the US patent application no. 2009/0208334, it is possible, among the other things, to limit the maximum width of angular displacements of the aileron through the retaining means, and according to the variation embodiment with adjustable retaining means, it is also possible to adjust such maximum width.

The above described yaw control device is susceptible to numerous modifications and variations within the protection scope defined by the claims.

Thus, for example, a resilient means, such as a traction spring, can be provided for in place of the weight 20, which, on the one side, acts on the aileron 11 and, on the other, reacts on the rudder 2.

## Claims

1. A device for controlling the yaw of a fluid-dynamic generator of electric energy comprising:
- a rudder structure (2) acting as a support frame overhangingly borne by the generator to be controlled and extending in a substantially vertical, in use, lying plane,
- an aileron (11) hinged to said rudder structure (2), whereby being angularly displaceable with respect to said lying plane about a substantially vertical, in use, axis,
- control means (12) protruding from one face of said aileron (11) for controlling the angularly displacements thereof out of alignment with respect to said rudder structure (2),
- adjustment means (19, 20) supported by said rudder structure (2) and designed to yieldingly and controllably contrast the angular displacements of said aileron (11), and
- retaining means (14) borne by said aileron (11) and arranged to abut against said rudder structure (2) for limiting the maximum width of the angular displacements of said aileron (11),
**characterized in that** said retaining means (14) are adjustable, and comprises an abutting head (17) adjustable by being screwed, and a substantially C-shaped stirrup (14), and
**in that** said adjustment means comprises a tubular member (19), a weight (20) slidingly located in the tubular member (19), and a rope (21) having one end thereof anchored to said weight (20) and its other end anchored to said retaining means (14) or to said aileron (11) opposite to said control means (12).

2. A device as claimed in claim 1, **characterized in that** said control means is substantially shaped as a flat vane (12) overhangingly borne by said aileron (11) and tilted with respect thereto.

3. A device as claimed in any claim 1 to 2, **characterized in that** said adjustment means comprises a resilient means acting, on the one side, on said aileron (11) and, on the other, on said rudder structure (2).

## Patentansprüche

1. Vorrichtung zur Windrichtungsnachführung eines fluiddynamischen Elektroenergiegenerators, umfassend:
- eine Ruderkonstruktion (2), die als überhängend von dem zu steuernden Generator getragener Tragrahmen wirkt und sich im Wesentlichen in einer, beim Gebrauch, senkrechten Lageebene erstreckt,
- ein Querruder (11), das an die Ruderkonstruktion (2) angelenkt ist, wobei es um eine im Wesentlichen, beim Gebrauch, senkrechte Achse winklig zu dieser Lageebene verstellbar ist,
- ein Steuermittel (12), das von einer Fläche des Querruders (11) vorsteht, zum Steuern der winkligen Verstellungen desselben aus der Fluchtung mit der Ruderkonstruktion (2),
- ein Einstellmittel (19, 20), das von der Ruderkonstruktion (2) getragen wird und gestaltet ist, um den Winkelverstellungen des Querruders (11) nachgiebig und kontrollierbar entgegenzuwirken, und
- ein Rückhaltemittel (14), das vom Querruder (11) getragen wird und eingerichtet ist, um an der Ruderkonstruktion (2) anzuliegen, um die maximale Weite der Winkelverstellungen des Querruders (11) zu begrenzen,
**dadurch gekennzeichnet, dass** dieses Rückhaltemittel (14) einstellbar ist und einen Anlagekopf (17), der eingestellt werden kann, indem er eingeschraubt wird, und einen im Wesentlichen C-förmigen Bügel (14) umfasst, und
dadurch, dass das Einstellmittel ein röhrenförmiges Element (19), ein Gewicht (20), das gleitend in dem röhrenförmigen Element (19) angeordnet ist, und ein Seil (21) umfasst, dessen eines Ende an dem Gewicht (20) verankert ist und dessen anderes Ende an dem Rückhaltemittel (14) oder an dem Querruder (11) gegenüber dem Steuermittel (12) verankert ist.

2. Vorrichtung nach Anspruch 1, **dadurch gekennzeichnet, dass** das Steuermittel im Wesentlichen wie eine flache Windfahne (12) geformt ist, die überhängend von dem Querruder (11) getragen wird und schräg zu demselben ist.

3. Vorrichtung nach einem der Ansprüche 1 bis 2, **dadurch gekennzeichnet, dass** das Einstellmittel elastische Mittel umfasst, die auf der einen Seite auf das Querruder (11) und auf der anderen Seite auf die Ruderkonstruktion (2) wirken.

## Revendications

1. Dispositif pour commander l'orientation d'un générateur fluido-dynamique d'énergie électrique comprenant :
- une structure de gouvernail (2) agissant sur un châssis de support porté en surplomb par le générateur à commander et s'étendant dans un plan sensiblement vertical, durant l'utilisation,
- un aileron (11) articulé à ladite structure de gouvernail (2), étant ainsi déplaçable angulairement par rapport audit plan autour d'un axe sensiblement vertical, durant l'utilisation,
- des moyens de commande (12) faisant saillie à partir d'une face dudit aileron (11) pour commander les déplacements angulaires de celui-ci hors alignement par rapport à ladite structure de gouvernail (2),
- des moyens de réglage (19, 20) supportés par ladite structure de gouvernail (2) et conçus pour contraster de manière élastique et contrôlable les déplacements angulaires dudit aileron (11), et
- des moyens de retenue (14) portés par ledit aileron (11) et agencés pour venir en butée contre ladite structure de gouvernail (2) pour limiter la largeur maximale des déplacements angulaires dudit aileron (11),
**caractérisé en ce que** lesdits moyens de retenue (14) sont réglables et comprennent une tête de butée (17) réglable par vissage et un étrier sensiblement en forme de C (14), et
**en ce que** lesdits moyens de réglage comprennent un élément tubulaire (19), un poids (20) positionné de manière coulissante dans l'élément tubulaire (19) et une corde (21) ayant une extrémité fixée audit poids (20) et son autre extrémité fixée auxdits moyens de retenue (14), ou audit aileron (11) opposé auxdits moyens de commande (12).

2. Dispositif selon la revendication 1, **caractérisé en ce que** lesdits moyens de commande sont sensiblement formés comme une pale plate (12) portée en surplomb par ledit aileron (11) et inclinée par rapport à celui-ci.

3. Dispositif selon l'une quelconque des revendications 1 à 2, **caractérisé en ce que** lesdits moyens de réglage comprennent un moyen élastique agissant, d'un côté, sur ledit aileron (11) et, de l'autre, sur ladite structure de gouvernail (2).
